# DEMANDE DE BREVET EUROPEEN

(11) **EP 3 730 398 A1**
(43) Date de publication de la demande: **28.10.2020**
(21) Numéro de dépôt: 19020301.8
(22) Date de dépôt: 22.04.2019
(51) Int. Cl.: B63B 35/34

(54) **PROCÉDÉ POUR AUGMENTER L'EXPLOITATION DES NAVIRES ÉLECTRIQUES**

(71) Demandeur: EPNaval, 44100 Nantes (FR)
(72) Inventeur: Prang, Eric, 44100 Nantes (FR)

(57) **Abrégé**

L'invention proposée permet d'accroître considérablement l'exploitation d'un navire électrique. Plus particulièrement le rayon d'action, mais plus globalement toutes les phases d'utilisation et d'entretien du navire. Il s'adresse plus particulièrement aux petits navires à usage commercial de 10 à 40 mètres qui rayonnent à partir d'une base unique. Mais des applications de l'invention pour des bateaux de plaisance, ou tout autres navires électriques est également envisagé.

L'invention consiste à utiliser un élément flottant supplémentaire ayant des formes adaptées à la carène, comme un moule. Ce dispositif, appelé par la suite Ponton dans ce brevet, est couplé mécaniquement au navire et permet différents services, augmentant ainsi les capacités du navire et son exploitation.

Ce procédé permet notamment de répondre à la difficulté de recharger rapidement des batteries. Ces difficultés sont liées aux courants forts et aux hautes tensions qu'il est toujours complexe de maîtriser avec sécurité dans un milieu maritime ou fluvial. Mais la connexion de câbles vers un véhicule toujours en mouvement, même amarré à un quai, pose également des problèmes d'exploitation intensive. L'invention consiste alors à utiliser une technique de remplacement rapide de packs de batteries.

Le remplacement rapide de batteries nécessite une manipulation de charge, importante pour le cas de batteries de forte capacité, d'un poids de 80 à 600 kg. Cette manipulation est également très délicate, comme toute manipulation entre la terre et un engin flottant. L'invention propose donc une solution qui permet en toute sécurité et avec une rapidité importante de faire cette manipulation et de répondre globalement à la question d'une recharge quasi instantanée des capacités énergétiques d'un navire.

Ce procédé permet également une optimisation des moyens de stockage de l'énergie qui peut être produite à terre par des moyens non réguliers. Effectivement les énergies renouvelables (solaire, éolien, hydrolien, houlomoteur) ne sont pas continues et leur utilisation nécessite des moyens de stockage. L'invention permet de mutualiser ces moyens de stockage et de les rendre ainsi directement disponibles pour l'exploitation des navires, limitant ainsi les pertes et les coûts.

Le dispositif à également la capacité de sortir le bateau hors de l'eau :
1. Soit de façon simple : en restant à quai il empêche le foulling de la coque du navire par les algues et les animaux marins.
2. Soit d'une façon plus radicale, à l'image d'une remorque de mise à l'eau, par roulage sur un plan incliné, cale ou plage.

D'autres services, permettant une meilleure exploitation du navire sont également rendus possible par ce dispositif et sont aussi expliqués dans ce brevet.

## Description

### Résumé :

L'invention proposée permet d'accroître considérablement l'exploitation d'un navire électrique. Plus particulièrement le rayon d'action, mais plus globalement toutes les phases d'utilisation et d'entretien du navire. Il s'adresse plus particulièrement aux petits navires à usage commercial de 10 à 40 mètres qui rayonnent à partir d'une base unique. Mais des applications de l'invention pour des bateaux de plaisance, ou tout autres navires électriques est également envisagé.

L'invention consiste à utiliser un élément flottant supplémentaire ayant des formes adaptées à la carène, comme un moule. Ce dispositif, appelé par la suite Ponton dans ce brevet, est couplé mécaniquement au navire et permet différents services, augmentant ainsi les capacités du navire et son exploitation.

Ce procédé permet notamment de répondre à la difficulté de recharger rapidement des batteries. Ces difficultés sont liées aux courants forts et aux hautes tensions qu'il est toujours complexe de maîtriser avec sécurité dans un milieu maritime ou fluvial. Mais la connexion de câbles vers un véhicule toujours en mouvement, même amarré à un quai, pose également des problèmes d'exploitation intensive. L'invention consiste alors à utiliser une technique de remplacement rapide de packs de batteries.

Le remplacement rapide de batteries nécessite une manipulation de charge, importante pour le cas de batteries de forte capacité, d'un poids de 80 à 600 kg. Cette manipulation est également très délicate, comme toute manipulation entre la terre et un engin flottant. L'invention propose donc une solution qui permet en toute sécurité et avec une rapidité importante de faire cette manipulation et de répondre globalement à la question d'une recharge quasi instantanée des capacités énergétiques d'un navire.

Ce procédé permet également une optimisation des moyens de stockage de l'énergie qui peut être produite à terre par des moyens non réguliers. Effectivement les énergies renouvelables (solaire, éolien, hydrolien, houlomoteur) ne sont pas continues et leur utilisation nécessite des moyens de stockage. L'invention permet de mutualiser ces moyens de stockage et de les rendre ainsi directement disponibles pour l'exploitation des navires, limitant ainsi les pertes et les coûts.

Le dispositif à également la capacité de sortir le bateau hors de l'eau :
1. Soit de façon simple : en restant à quai il empêche le foulling de la coque du navire par les algues et les animaux marins.
2. Soit d'une façon plus radicale, à l'image d'une remorque de mise à l'eau, par roulage sur un plan incliné, cale ou plage.

D'autres services, permettant une meilleure exploitation du navire sont également rendus possible par ce dispositif et sont aussi expliqués dans ce brevet.

### Domaine technique :

L'invention est un savoir faire dans le domaine de **ingénierie et l'architecture navale,** mais également un savoir faire sur les **techniques électriques** et les **systèmes automatiques.**

Elle concerne les navires de petites ou moyennes tailles, de préférence avec une structure de type multicoque, mais cette caractéristique des coques n'est pas rédhibitoire.

Plus particulièrement elle apporte des innovations importantes pour les navires électriques et les **moyens de rechargement des accumulateurs** de type batterie de tous types confondus. Elle concerne en partie les **installations portuaires** qui peuvent offrir ce service de recharge rapide, mais elle est également applicable à **l'équipement de zones non** p**ortuaires,** comme les zones de mouillages, ou les plages aménagées pour le tourisme par exemple.

Cette invention permet d'améliorer les phases de prise de quai, amarrage et de transbordement des passagers et des marchandises. Elle limite également par son utilisation les risque d'incendie. Dans ce cadre elle participe à la **sécurité** de l'exploitation des navires.

Par la limitation des moyens de levage nécessaire, pour mettre au sec le ponton et le navire, et par l'autonomie du dispositif, cette invention permet d'améliorer **les moyens de maintenance.**

Enfin cette invention permet de mieux utiliser et profiter des véhicules électriques, donc l'invention traite d**'écologie et de transition énergétique.**

### État de l'art :

La base du projet est d'utiliser un ponton adapté au navire.

L'état de l'art ne traite, à notre connaissance, que de pontons qui permettent de glisser les bateaux hors de l'eau par des systèmes de rouleaux ou équivalents. Les bateaux utilisent leur propre énergie pour monter sur ces pontons adaptés, ou sont parfois aidés par des systèmes à treuil. Ces pontons, généralement modulaires, permettent de mieux concevoir les ports, ou bases de loisir, mais uniquement pour les tous petits bateaux type jet-ski, kayaks ou petites embarcations de pêche ou de loisirs.

Des systèmes de « verrouillage » des navires à quai existent et permettent généralement de réaliser un amarrage rapide, sans amarres, mais en utilisant la propulsion du navire pour le maintenir dans sa position. Ils sont utilisés pour les bacs et les navires faisant plusieurs étapes rapides dans leurs exploitations.

Actuellement les navires électriques sont majoritairement rechargés par des prises de quai. Le principe est le même que pour les voitures électriques qui sont rechargées par des prises de quai dans des parkings aménagés. Mais un navire électrique demande beaucoup d'autonomie, et est de taille et de poids bien supérieur à une voiture. C'est pourquoi le pack de batteries embarquées est généralement au moins égal à celui d'une voiture, mais peut être facilement dix fois supérieur. Le domaine de l'état de l'art le plus proche de l'invention est donc plutôt celui des bus ou autocars électriques. Ceux ci sont pour l'heure, et à cause de cette problématique, encore souvent hybrides, pour permettre une recharge pendant le voyage. Il faut noter que la solution hybride est également largement employée en naval, et notamment avec de la recharge solaire.

Embarquer de nombreux panneaux solaires est un moyen de production d'énergie assez bien adapté au milieu maritime, et donc souvent largement proposé. La place à bord exposée au soleil étant quand même limitée ainsi que l'énergie elle même fournie par le soleil, cette solution ne convient pas totalement aux navires qui doivent transiter à des vitesses économiques de 8 à 20 noeuds, comparables à celles obtenues assez facilement avec des moteurs thermiques. L'invention ne parle donc pas de la génération électro solaire, mais celle ci n'est pas incompatible, bien au contraire, elle peut être considérée comme un complément.

Dans le domaine automobile, la solution est actuellement de réaliser des chargeurs dit rapides. Ceci impose de monter en tension, et aussi en courant pour obtenir un transfert d'énergie plus important. Ceci nécessite également des techniques de conception de batterie toujours plus sophistiquées pour cette charge « rapide ». Tout cela débouche sur une baisse de la sécurité et donc une augmentation du risque d'incendie du dispositif. Effectivement les courants forts, la connectique, les batteries en charge rapide génèrent des élévations de température importantes qu'il est nécessaire de maîtriser. Il faut noter que ce risque est largement amplifié dans un environnement marin, soumis au mouvement, à l'humidité et à la corrosion. La solution des chargeurs rapides n'est donc pas une solution parfaite pour les applications navales. Le principe d'une permutation de batterie à été proposé dans le domaine automobile mais abandonné au profit de la recharge rapide¹.

Le remplacement de batteries à déjà été évoqué pour les véhicules terrestres, et certains brevets de constructeurs automobiles ont déjà été déposés sur ce sujet. Mais ceux ci ne s'adressent absolument pas au domaine maritime, où la manipulation d'objets lourds comme les batteries, vers des véhicules en mouvement à quai ou au mouillage, pose des problèmes spécifiques.

Pour les très gros navires, des systèmes de branchement automatique tentent de voir le jour, parfois comme standard, parfois comme dispositif breveté². Ces systèmes, étant d'une importance capitale pour l'écologie et la réduction des émission de CO², sont en constant développement. Ils consistent à automatiser et à sécuriser le branchement d'un gros câble aux navires. Ces systèmes sont limités aux navires de commerce de gros tonnage (porte-conteneurs, paquebots, cargos)

### Exposé de l'invention :

L'invention concerne un dispositif de couplage d'un élément flottant, appelé «ponton» et d'un navire, caractérisé en ce qu'il comprend (voir illustration 5 et 6):
- Le ponton, qui comporte un stock de batteries de rechange et différents dispositifs de mise en oeuvre. Ce ponton est de préférence de conception modulaire afin de permettre différentes variations de fonctionnalités, comme exposé dans ce brevet, mais également pour s'adapter plus facilement aux différents types de navires. Ce ponton est toujours d'une largeur légèrement inférieure à la largeur des navires considérés.
- Un système de recharge électrique des batteries logées dans le ponton. Ce système de recharge doit avoir des capacités adaptées à l'utilisation du navire, mais pas forcement des capacités importantes surtout en terme de vitesse de charge.
   1 Voir faillite de la société Better Place
   2 Voir : "PLUG" acronyme de "Power Génération during Loading & Unloading" ou AMP acronyme de Alternative Marine Power
- Un système de mesure de position relative entre ponton et navire. Ce système peut être soit mécanique (butées), soit électrique, ou de toutes technologies robustes et adaptées au domaine maritime. Ce système est couplé à un automate de mise en oeuvre qui permet d'aider à la manoeuvre et de dérouler les séquences adaptées.
- Un système de fourniture de l'énergie. Celui ci peux être simplement un câble électrique relié au réseau électrique terrestre, mais aussi un système autonome, comme des panneaux solaires, un système houlomoteur, ou autre.
- Un navire électrique avec une architecture adaptée, c'est à dire de forme multicoques (catamaran ou trimaran de préférence), avec des packs de batteries accessibles par le dessous ou le coté.
- Un système de motorisation qui permet de déplacer les packs batteries avec des mouvements extrêmement simples. Cette motorisation peut être électrique, pneumatique ou hydraulique.
- Éventuellement un système de motorisation qui permet de déplacer relativement le navire par rapport au ponton. Des solutions à base de moteur électrique ou pneumatique peuvent être utilisées, conjointement avec des roues en matériaux souples, pour exercer des pressions sur la coque.
- Éventuellement un système de ballast qui permet d'exercer une poussée ascendante du ponton sur le navire pour le sortir partiellement de l'eau.
- Éventuellement un équipement roulant qui permet de transformer le ponton en une remorque pour sortir le bateau de l'eau par roulage, sur un plan incliné de type cale ou plage.
- Éventuellement un dispositif de passerelle qui permet de solidariser le ponton au quai, mais également de faciliter l'embarquement et le débarquement des passagers et des marchandises à bord.

### Transfert de packs de batteries :

L'invention concerne également un procédé de transfert de blocs batteries qui comporte les étapes suivantes :
1. le navire vient se positionner sur le ponton flottant
2. le ponton gère la position relative entre lui et le navire par des dispositifs simples comme des glissières et des roues de guidage. Les deux éléments étant flottant sur la même eau ce principe est aisé.
3. Dans une première phase le navire vient relâcher un ou plusieurs packs de batteries par un mouvement vertical. Les batteries descendent ainsi guidées dans le ponton.
4. Le ponton verrouille le pack batterie et le connecte à son chargeur interne.
5. Dans une deuxième phase le navire est déplacé par rapport au ponton pour se trouver devant un logement de batteries chargées.
6. Ensuite le ponton hisse le pack batterie dans le navire
7. Le navire verrouille le pack batterie et la connecte à son réseau énergie.

L'opération peut être renouvelée plusieurs fois si plusieurs packs batteries sont présents.

Le nombre de logement de batteries dans le ponton peut être supérieur au nombre de batteries embarquées à bord du navire. Dans ce cas plusieurs chargements peuvent être effectués de suite, avec des packs de batteries différents. Ce procédé permet de disposer de plus de réserve d'énergie, et surtout de plus de temps pour recharger les batteries avant leur utilisation à bord. Le nombre de positions relatives entre ponton et navire est de deux plus le nombre de batteries supplémentaires utilisées dans le ponton.

Il est également possible d'avoir pour une position relative ponton-navire donnée, plusieurs logement de batteries en correspondance. Dans ce cas l'ensemble des packs batteries peut être manipulé simultanément dans cette position relative.

La démarche est toujours identique : le navire progresse sur le ponton et est arrêté sur la position « vide », ensuite il progresse toujours dans le même sens pour aller à la dernière position. C'est dans cette position uniquement que l'on pourra procéder à l'embarquement des passagers et marchandises par la passerelle du ponton (voir illustration 6). Au moment de repartir, le navire embarque le pack de batteries le plus chargé, à la position correcte gérée par le ponton (voir illustration 3,7 et 8). En dernière position c'est la motorisation propre du navire qui réalise le désarrimage ponton-navire.

### Sortie de l'eau pour fonction antifouling :

La mise en position de repos entre les navigations est réalisée par les étapes suivantes :
1. Positionnement relatif navire-ponton sélectionné pour avoir le meilleur équilibre possible. Il faut dans ce cas que le centre de carène du ponton, ballast vide, soit positionné sous le centre de gravité du navire. On peut remarquer que cette position ne correspond par forcement à une position de chargement des batteries, mais cela est plus simple si ce positionnement correspond.
2. Vidage des ballasts. Soit par chasse de l'eau par un système d'air comprimé. Cette solution étant certainement la plus rapide car l'air comprimé peut être stocké au préalable par un petit compresseur dans la structure du ponton. La chasse peut alors être très rapide. Soit par utilisation d'une pompe qui va vider l'eau du ballast. Dans ce cas la vitesse de sortie de l'eau sera fonction de la puissance de la pompe, et donc plus faible. Ce n'est pas un problème car c'est une mise en position de stockage qui doit durer au moins plusieurs heures pour être efficace, donc le temps de monté hors de l'eau n'est pas très important.

La remise en position d'utilisation est encore plus simple, il suffit d'ouvrir une vanne de remplissage des ballasts et le navire va reprendre sa position de flottabilité naturelle par simple gravité. Il est à noter que la vitesse de descente est très simple à régler en fonction des capacités du navire et du bassin, par simple modification du débit d'entrée d'eau ou de sortie d'air du ballast.

### Sortie de l'eau complète et manipulation du ponton, ou du ponton-navire :

Le ballast vide, le tirant d'eau ponton-navire est très faible. Il est alors simple de tracter l'ensemble du dispositif sur une pente faible et de le manipuler à terre. Ce procédé permet d'éviter des moyens de levage traditionnels et donc de faciliter et de diminuer les coûts de maintenance du ponton et du navire.

Le ponton peut être manipulé à terre soit par un tracteur externe, mais il est possible d'avoir une autonomie complète en incorporant soit un treuil, soit un moyen de motorisation des roues. Les packs de batteries internes au ponton sont alors utilisés pour donner l'autonomie énergétique au dispositif. (voir illustration 4)

### Fonctionnalités supplémentaires apportées par le dispositif :

- **Sécurité incendie** : Le système de verrouillage et d'embarquement des packs de batteries à bord permet un « largage rapide » de celles-ci en mer en cas d'incendie. En effet, l'emport de batteries de grande capacité présente toujours un risque d'incendie par échauffement. Le système de transfert de batterie peut alors être activé en mer avec pour conséquence une immersion des matières dangereuses. Après refroidissement les packs de batteries, maintenu par des filins, peuvent être récupérés pour éviter toute pollution.
- **Réserve de la position du navire dans le port :** Sans prendre de place supplémentaire à la taille du navire dans le port, le dispositif permet d'assurer la disponibilité de la place. En effet aucun autre bateau, qui n'a pas la forme adaptée, ne peux venir sur la place. Ceci permet de garantir à l'armateur et à l'équipage de retrouver sa place au retour au port. Dans le cas de ligne de transport conséquente, plusieurs bateaux identiques peuvent utiliser le dispositif de façon séquentielle, à chaque station par exemple.
- **Nettoyage de la carène :** Des brosses peuvent être fixées sur le ponton. Grâce au mouvement horizontaux précis et contrôlés du navire sur le ponton, ces brosses peuvent participer au nettoyage de la coque et avoir un effet antifoulling complémentaire.
- **Aide à la manoeuvre** : Le dispositif présente des formes à l'arrière qui facilitent l'arrivé du navire et le guide. Ceci permet d'aider le pilote à prendre position. Cet avantage peut être important en condition de vent fort ou de présence de courants. Cette pratique permet de ne pas endommager le bateau et évite l'utilisation de pare-battages traditionnels.

### Cas spécifiques et variantes :

- **Cas des monocoques :** Dans ce cas le ponton a toujours une largeur légèrement inférieure au navire. La difficulté vient du fait qu'il n'y a pas de possibilité de faire l'échange de batterie en dehors de l'eau. Mais le procédé proposé permet quand même de réaliser cette opération. Pour cela il faut :
   1. placer le navire au préalable en position hors de l'eau en mode antifouling. Le bas de la coque est alors au ras de l'eau. Les volume de flottabilité du ponton sont situés dans ce cas sur les bords du navire et non au centre. L'équilibre du bateau est donc assuré.
   2. Disposer de plaques de fermeture étanche à l'extérieur du pack de batteries. Ces plaques sont en continuité de la coque pour ne pas avoir d'augmentation de la traîné du navire. Le pack de batteries est éjecté de la même façon, avec un connecteur étanche entre pack batteries et carène.
   3. Puis remettre en place une nouvelle batterie pour assurer l'étanchéité et la continuité de la carène, avant la descente du bateau dans l'eau.
   4. Par sécurité, la carène est complétée, derrière le pack batterie, par un caisson qui assure la flottaison du navire, même en cas d'éjection des batteries en mer, ou même en cas de défaut de couplage du bloc batterie sur la carène.
- **Protection des batteries stockées à bords du ponton :** Des trappes de fermeture peuvent être utilisées pour protéger les packs batteries dans les alvéoles du ponton. Ces trappes peuvent être ouvertes soit toutes en même temps, avec une trappe unique, soit être déplacées directement par le dispositif de levage des batteries.

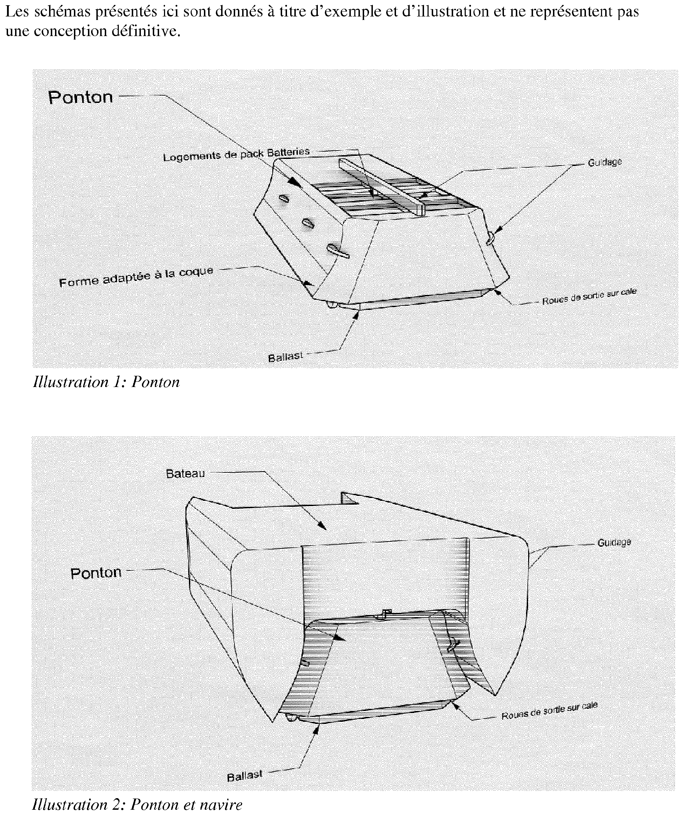

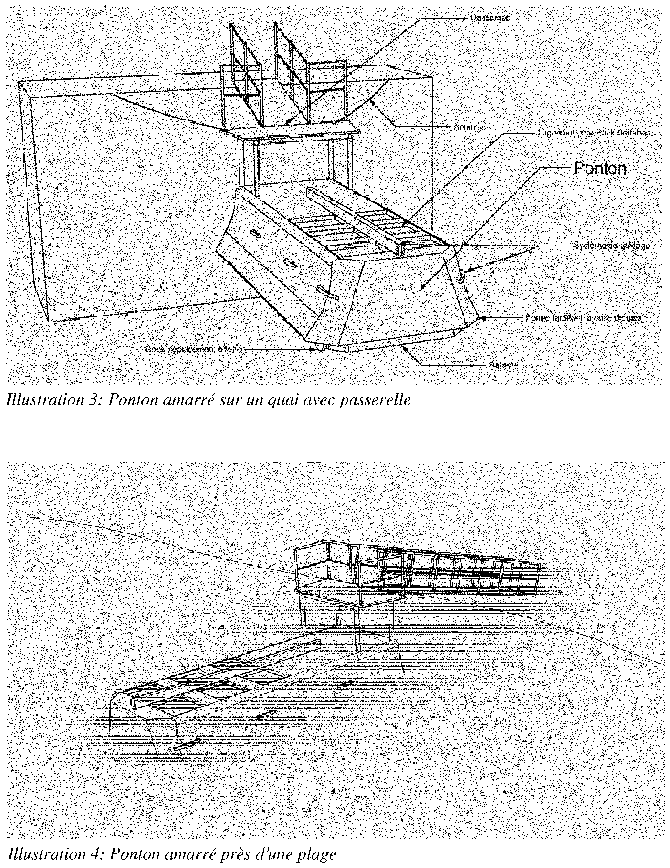

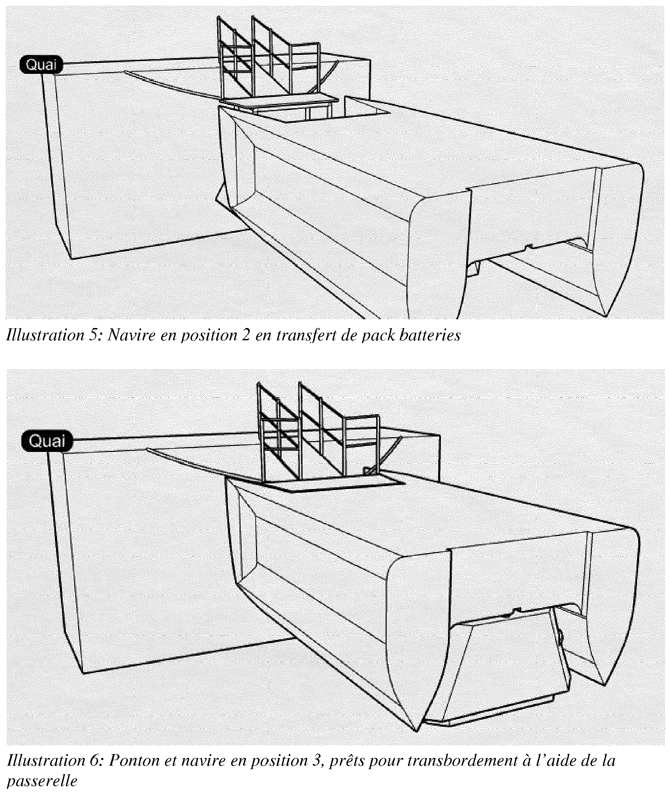

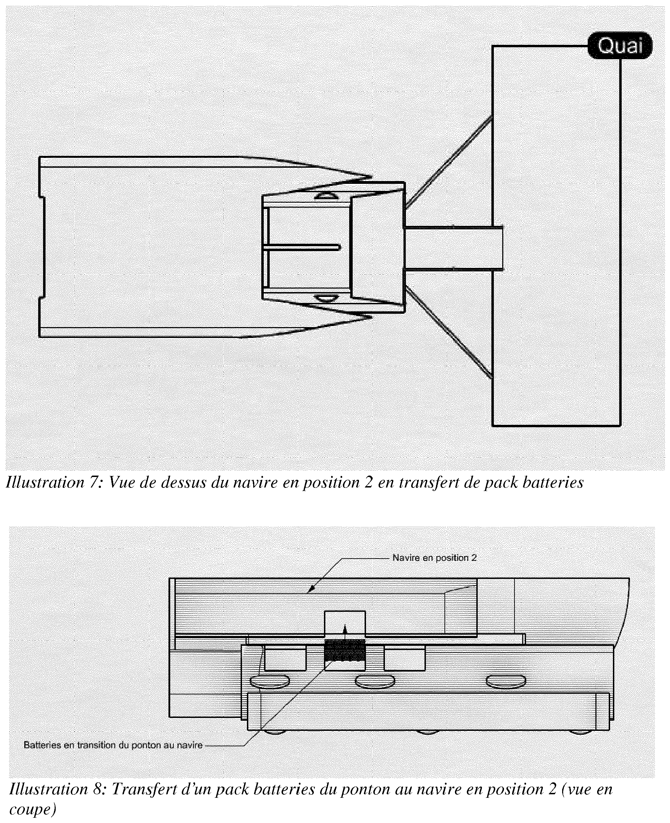

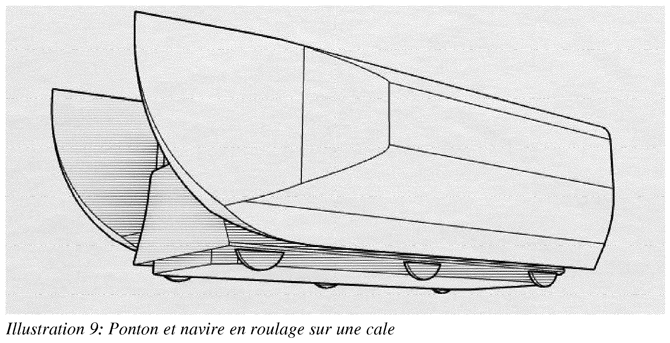

## Revendications

1. Procédé d'augmentation des capacités et de l'utilisation des navires électriques **caractérisé par** les points suivants :
a. Utilisation d'un «ponton» qui s'adapte sous la coque du navire pour lequel il est conçu. Il à une largeur légèrement inférieur au navire et une longueur, variable en fonction des utilisations, mais proche de celle du navire également.
b. Le ponton est utilisé en eau calme et est utilisé comme base d'un ou plusieurs navires. Il peut être amarré à un quai dans un port, mais également mouillé dans une baie ou un lieu protégé prés des cotes.
c. Le ponton est «couplé» au navire qui viens se positionner au dessus de lui. Des guides et des moyen de fixation permettent de solidariser simplement l'ensemble Ponton-Navire. Le ponton étant amarré, le navire devient, par son couplage au ponton également amarré. Cet amarrage est automatisé et rapide, simplifiant les amarrages conventionnels.
d. Le ponton est équipé de moyens qui permettent de rendre des services au navire. Ces service permettent alors d'améliorer l'utilisation du navire et améliore ses performances et son exploitation

2. Procédé selon la revendication 1 qui permet d'échanger des batteries entre le ponton et le navire. Pour cela le ponton comporte en plus:
a. Des packs de batteries identiquement à ceux utilisés dans le navire.
b. Un système de charge électrique des batteries
c. Un système de déplacement des batteries entre le ponton et le navire (chargement et déchargement mécanique)
d. Un système de connexion à une source d'énergies électrique qui fournie de l'énergie au ponton et permet de faire fonctionner ses équipements internes.

3. Procédé suivant la revendication 1 qui permet le déplacement précis du navire sur le ponton, permettant l'échange de plusieurs pack de batterie. Par un ajout de système de brossage, ce procédé permet également un nettoyage partiel de la coque.

4. Procédé selon la revendication 1 qui permet de soulever le navire de manière à sortir la coque de celui-ci de l'eau. Ce procédé permettant d'éviter le foulling de la coque par les algues et les animaux marin. Le procédé de levage de l'ensemble du navire étant réalisé par un simple ballastage. Très peu d'énergie est nécessaire. Le ponton est donc simplement équipé de ballaste dans sa partie basse. Ces ballastes sont soit remplie d'eau en position basse, soit vidée par un système à pompe ou un système de chasse par air comprimé inclut dans le ponton.

5. Procédé selon la revendication 2 qui réalise en plus un couplage électrique entre le ponton et le navire par l'utilisation d'un connecteur autocentré et par la monté du ponton grâce au système suivant la revendication 4. Celui -ci disposant alors d'énergie en position amarré pour fonctionner sans utilisation d'autre moyen d'énergie à bords (hotplug). Ce procédé évite l'utilisation d'autre moyen de connexion comme l'installation de câbles.

6. Procédé selon la revendication 4 qui permet la sortie du navire à terre. Ce principe permettant de faciliter la maintenance du ponton et du navire. Le ponton doit alors être équipé en plus:
a. de roues en partie basse, sous le navire. Ces roues seront adapté au plan incliné qui permettra une extraction du navire à terre. Soit un plan incliné bétonné, soit un plan incliné naturel comme une plage.
b. De façons optionnelles le ponton pourra être équipé de ses propres moyens de traction: treuil couplé à un câble accrocher à terre pour sortir l'ensemble bateau-ponton hors de l'eau, ou motorisation direct électrique des roues, à partir de l'énergie contenu dans les packs de batteries tampon.

7. Procédé selon la revendication 1 qui permet de faciliter l'accès au navire par l'adaptation d'une passerelle qui permet l'embarquement et le débarquement des passagers ou des marchandises transportés par le navire. La passerelle ainsi décrite peut participer à l'amarrage de l'ensemble du ponton. Celle ci doit également permettre les modifications éventuelles de hauteur d'eau (marnage) ainsi que les modifications de hauteur du navire sur l'eau dut à son chargement et/ou à l'utilisation du dispositif antifoulling d'écrit dans la revendication 4. Ce système de passerelle peux être également adapté pour des amarrage en bords de plage, ou à partir d'autres pontons.
